# EUROPEAN PATENT APPLICATION

(11) **EP 4 832 275 A1**
(43) Date of publication of application: **28.10.2026**
(21) Application number: 26160892.1
(22) Date of filing: 26.02.2026
(51) Int. Cl.: H02G 1/02, H02G 7/16

(54) **HARDWARE STRING FOR ADAPTIVE ICE-MELTING CONDITION OF OVERHEAD GROUND WIRE**

(30) Priority: 21.04.2025 CN 202510496915
(71) Applicant: Jiang Dong Fittings Equipment Co., Ltd., Nantong, Jiangsu 226463 (CN); Jiangsu Zhongtian Technology Co., Ltd., Nantong, Jiangsu 226000 (CN)
(72) Inventor: YE, Weiqing, Nantong City, 226463 (CN); FU, Rong, Nantong City, 226463 (CN); LI, Xinxin, Nantong City, 226463 (CN); WANG, Jingjing, Nantong City, 226463 (CN); MAO, Xinguo, Nantong City, 226463 (CN); YE, Peng, Nantong City, 226463 (CN); ZHAI, Qinghua, Nantong City, 226463 (CN); YAO, Wei, Nantong City, 226463 (CN); YE, Xiaoyan, Nantong City, 226463 (CN); ZHANG, Yu, Nantong City, 226463 (CN)
(74) Representative: J A Kemp LLP

(57) **Abstract**

The present invention relates to a field of ice-melting technology for overhead ground wires, and provides a hardware string for an adaptive ice-melting condition of an overhead ground wire, including: a ground wire, a static contact, a moving contact, a hardware string, a moving component, a first grounding wire, and a second grounding wire; the hardware string is adapted to be connected to a transmission tower; the moving component includes a moving mechanism and a control mainboard, the moving mechanism is arranged on the hardware string, and the moving contact is arranged on the moving mechanism; one end of the first grounding wire is connected to the moving contact, and the other end of the first grounding wire is adapted to be connected to the transmission tower; the static contact is arranged on the hardware string, one end of the second grounding wire is connected to the static contact, and the other end of the second grounding wire is adapted to be connected to the ground wire; the ground wire is arranged on the hardware string; where the control mainboard is configured to control the moving mechanism to move according to environmental information, and the moving contact is connected or separated from the static contact under driving of the moving mechanism. The switch automatically opens after icing without the need for manual tower climbing, reducing the time to disconnect the grounding knife switch when line icing, and achieving faster ice-melting of the ground wire.

## Description

### TECHNICAL FIELD

The present invention relates to a field of ice-melting technology for overhead ground wires and, in particular, to a hardware string for an adaptive ice-melting condition of an overhead ground wire.

### BACKGROUND

A high voltage transmission wire usually refers to a transmission line that transmits voltages above 110 kV. In a city, high voltage transmission generally adopts a cable with an insulation layer for underground transmission, while in the field, an overhead wire manner borne by a tower is often used for transmission. When the overhead line in the wild pass through an area prone to ice, snow, or freezing rain, they often suffer from adverse effects, and the probability of line icing is extremely high. The line icing refers to a condition where all wires within a range are covered in ice.

The overhead ground wire refers to a conductor that is directly connected to the earth on a high voltage and ultra-high voltage transmission line. Due to the shielding of the overhead ground wire on the conductor and the coupling effect between the conductor and the overhead ground wire, the chance of thunder and lightning directly striking the conductor can be reduced. Since the wire diameter of the overhead ground wire is small, it is more prone to breakage in the case of icing and falls onto the transmission line thereunder, resulting in a line fault, tripping, and a power outage. However, there is no dedicated ice-melting circuit in the overhead ground wire above the transmission line, so the ice-melting of the overhead ground wire is crucial.

Direct current ice-melting is mainly achieved by applying DC voltage to the transmission line and short circuiting at the end of the transmission line, causing the heating of the wire, and melting ice of the transmission line, thus avoiding the line from collapsing and breaking due to icing. The direct current ice-melting technology is advanced, does not require a large load, generally only needs 1 to 20 thousands of watts, and a direct current output voltage is adjustable, so that the ice-melting can be performed on a single line of different lengths within a certain range, line series connection is no longer required, the operation is relatively simple, and a simpler method is provided for the ice-melting work of the line. Currently, a mature automatic de-icing technology for a high voltage transmission line in the art is to increase a current in a conductor to exceed an operating current, so as to cause the wire to heat up, thereby melting and dropping ice, snow, mist, and the like that are attached to the conductor, so as to achieve the purpose of removing them. Currently, the ice-melting and wire connection for the overhead ground wire needs to be performed by manually climbing the overhead transmission iron tower, and has a high safety risk and low efficiency. In addition, an existing ground wire ice-melting apparatus is mainly a mechanical rotary type, which has a complicated structure, a large volume, a high manufacturing cost, and a low closing accuracy, has a certain operation risk, and is difficult to operate and maintain.

### SUMMARY

The present invention provides a hardware string for an adaptive ice-melting condition of an overhead ground wire to solve the problem of low efficiency of the existing ice-melting of the overhead ground wire.

The present invention provides a hardware string for an adaptive ice-melting condition of an overhead ground wire, including: a ground wire, a static contact, a moving contact, a hardware string, a moving component, a first grounding wire, a second grounding wire, and an environmental information collection module.

The hardware string is adapted to be connected to a transmission tower; the moving component includes a moving mechanism and a control mainboard, the moving mechanism is arranged on the hardware string, and the moving contact is arranged on the moving mechanism; one end of the first grounding wire is connected to the moving contact, and the other end of the first grounding wire is adapted to be connected to the transmission tower; the static contact is arranged on the hardware string, one end of the second grounding wire is connected to the static contact, and the other end of the second grounding wire is adapted to be connected to the ground wire; the ground wire is arranged on the hardware string; where the environmental information collection module is electrically connected to the control mainboard, and the environmental information collection module includes at least one of a temperature sensor and a humidity sensor; the control mainboard is configured to control the moving mechanism to move according to environmental information determined by the environmental information collection module, and the moving contact is connected or separated from the static contact under driving of the moving mechanism.

The hardware string for the adaptive ice-melting condition of the overhead ground wire provided according to the present invention, where in a case where an ambient temperature is -10~0 °C and an ambient humidity is greater than or equal to 80%, the control mainboard controls the moving mechanism to move to separate the moving contact from the static contact.

The hardware string for the adaptive ice-melting condition of the overhead ground wire provided according to the present invention, where in a case where an ambient temperature is higher than 5 °C or lower than -15 °C, and an ambient humidity is ≤ 60%, the control mainboard controls the moving mechanism to move to connect the moving contact with the static contact.

The hardware string for the adaptive ice-melting condition of the overhead ground wire provided according to the present invention, where the hardware string includes a wire clamp, a double yoke plate, a hang some hardware, a U-shaped hanging ring, and a first insulator; an upper end of the hang some hardware is adapted to be connected to the transmission tower, and a lower end of the hang some hardware is connected to the double yoke plate through the U-shaped hanging ring; two lower ends of the double yoke plate are respectively connected to a string of the first insulators, and bottom ends of the two strings of the first insulators are connected to the wire clamp;
where the moving mechanism is arranged on one end of the first insulator near the double yoke plate through a first mounting base, the static contact is arranged on one end of the first insulator near the wire clamp through a second mounting base, and the ground wire is arranged on the wire clamp.

The hardware string for the adaptive ice-melting condition of the overhead ground wire provided according to the present invention, where the first insulator is a composite insulator with an insulation gap; and/or,
the two strings of the first insulators are symmetrically distributed.

The hardware string for the adaptive ice-melting condition of the overhead ground wire provided according to the present invention, where the wire clamp includes a suspension wire clamp or a tension wire clamp.

The hardware string for the adaptive ice-melting condition of the overhead ground wire provided according to the present invention, where the moving mechanism is a linear moving part; and/or,
the moving component further includes a second insulator, and the moving contact is connected to the moving mechanism through the second insulator.

The hardware string for the adaptive ice-melting condition of the overhead ground wire provided according to the present invention further includes: a human-computer interaction module, where the human-computer interaction module is adapted to be arranged under the transmission tower, the human-computer interaction module is electrically connected to the control mainboard, and the human-computer interaction module is configured to receive an instruction and display information input by a user.

The hardware string for the adaptive ice-melting condition of the overhead ground wire provided according to the present invention further includes a power supply component, where the power supply component includes a photovoltaic panel and a storage battery, the photovoltaic panel is adapted to be arranged on the transmission tower, the photovoltaic panel is electrically connected to the storage battery, and at least one of the moving mechanism and the control mainboard is electrically connected to the storage battery.

The hardware string for the adaptive ice-melting condition of the overhead ground wire provided according to the present invention, where in a case where the moving contact and the static contact are separated, a maximum straight-line distance between the moving contact and the static contact is 240-260 mm.

The hardware string for the adaptive ice-melting condition of the overhead ground wire is provided in the present invention, when the control mainboard determines that the environment where the ground wire is located is non-icing according to current environmental information, the control mainboard controls the moving mechanism to move, and the moving contact comes into contact with the static contact under the driving of the moving mechanism. At this point, the first grounding wire, the second grounding wire, and the ground wire are in a conductive state. When the control mainboard determines that the environment where the ground wire is located is icing or impending icing according to the current environmental information, the control mainboard controls the moving mechanism to move, the moving contact separates from the static contact under the driving of the moving mechanism. At this time, the first grounding wire and the second grounding wire are in a disconnected state, so that the direct current ice-melting job can be performed on the ground wire. That is to say, the moving contact can move flexibly under the drive of the moving mechanism. When there is no icing, the moving contact comes into contact with the static contact, thus grounding is achieved. When there is icing or impending icing, the moving contact separates from the static contact, thereby insulation is achieved, and the use requirements of lightning protection grounding and ice-melting insulation are considered. In addition, the switch automatically opens after icing without the need for manual tower climbing, reducing the time to disconnect the grounding knife switch when line icing, and achieving faster ice-melting of the ground wire.

### BRIEF DESCRIPTION OF DRAWINGS

In order to more clearly illustrate the technical solutions of the present invention or the prior art, a brief introduction will be given to the accompanying drawings required for the description in the embodiments or the prior art. It is obvious that the accompanying drawings described below are some embodiments of the present invention. For those skilled in the art, other drawings can be obtained based on these drawings without creative labor.
FIG. 1 is a first schematic structural diagram of a hardware string for an adaptive ice-melting condition of an overhead ground wire provided in the present invention.
FIG. 2 is a second schematic structural diagram of a hardware string for an adaptive ice-melting condition of an overhead ground wire provided in the present invention.
FIG. 3 is a third schematic structural diagram of a hardware string for an adaptive ice-melting condition of an overhead ground wire provided in the present invention.

Reference numbers:
1. ground wire; 2. first grounding wire; 3. second grounding wire; 4. moving contact; 5. static contact; 6. moving component; 61. moving mechanism; 62. control mainboard; 63. second insulator; 7. hardware string; 71. hang some hardware; 72. U-shaped hanging ring; 73. double yoke plate; 74. first insulator; 75. socket clevis; 76. wire clamp; 8. environmental information collection module; 9. power supply component; 91. photovoltaic panel; 92. storage battery; 10. first mounting base; 11. second mounting base; 12. transmission tower.

### DESCRIPTION OF EMBODIMENTS

In order to make purposes, technical solutions and advantages of the present invention clearer, the technical solutions in the present invention will be described clearly and completely in the following in conjunction with the accompanying drawings in the embodiments of the present invention, and it is obvious that the described embodiments are a part of the embodiments of the present invention, rather than all of the embodiments. Based on the embodiments in the present application, all other embodiments obtained by an ordinary person skilled in the art without creative labor are within the protection scope of the present invention.

In the description of the embodiments of the present invention, it should be noted that the terms "central", "longitudinal", "transverse", "upper", "lower", "front", "back", "left", "right", "vertical", "horizontal", "top", "bottom", "inner", "outer" and the like indicate orientation or positional relationships based on those shown in the accompanying drawings, and are used only for the purpose of facilitating the description of the embodiments of the present invention and simplifying the description, and do not indicate or imply that the apparatuses or elements referred to must have a particular orientation, be constructed and operated in a particular orientation, and therefore cannot be interpreted as a limitation of embodiments of the the present invention. Furthermore, the terms "first", "second", and "third" are only used for descriptive purposes, and are not to be construed as indicating or implying relative importance.

In the description of the embodiments of the present invention, it should be noted that unless otherwise expressly provided and limited, the terms "connect to", "connect with", etc. are to be understood in a broad sense, for example, they may be a fixed connection, a removable connection, or an one-piece connection; or they may be a mechanical connection, an electrical connection; or they may be a direct connection, an indirect connection through an intermediary medium. For those ordinary skilled in the art, the specific meanings of the above terms in the embodiments of the present invention can be understood based on specific situations.

In the embodiments of the present invention, unless otherwise expressly specified and limited, a first feature being "above" or "below" a second feature may be that the first feature is in direct contact with the second feature, or the first feature is in indirect contact with the second feature through an intermediate medium. Moreover, the first feature being "above", "over" and "on top of" the second feature may be that the first feature is directly above or diagonally above the second feature, or simply indicates that the first feature is horizontally higher than the second feature. The first feature being "under", "below" and "beneath" the second feature may be that the first feature is directly below or diagonally below the second feature, or simply indicates that the first feature is horizontally lower than the second feature.

In the description of this specification, the reference terminologies "one embodiment", "some embodiments", "examples", "specific examples", or "some examples" means that the specific features, structures, materials, or characteristics described in conjunction with embodiments or examples are included in at least one embodiment or example of the present invention. In this description, the schematic expressions of the above terms do not necessarily refer to the same embodiments or examples. Moreover, the specific features, structures, materials, or characteristics described can be combined in any one or more embodiments or examples in an appropriate manner. In addition, persons skilled in the art can combine and integrate the different embodiments or examples described in this specification, as well as the features of different embodiments or examples, without conflicting with each other.

If the power grid suffers from rain, snow, and freezing disasters, it will pose a serious threat to the safe operation of the power grid. At present, there is a mature technology for ice-melting of conductors, and the overhead ground wire needs to be insulated from the ground in order to have a condition for applying an ice-melting current.

At present, the ice-melting of the ground wire adopts a segmented insulation single point or multi-point grounding method. Under a non-ice-melting condition, the ground wire is grounded at a single point or multiple points within one ice-melting section, and when the ice-melting is required, it is necessary to climb the tower manually to disconnect the grounding points one by one, which poses a significant safety risk under icing conditions.

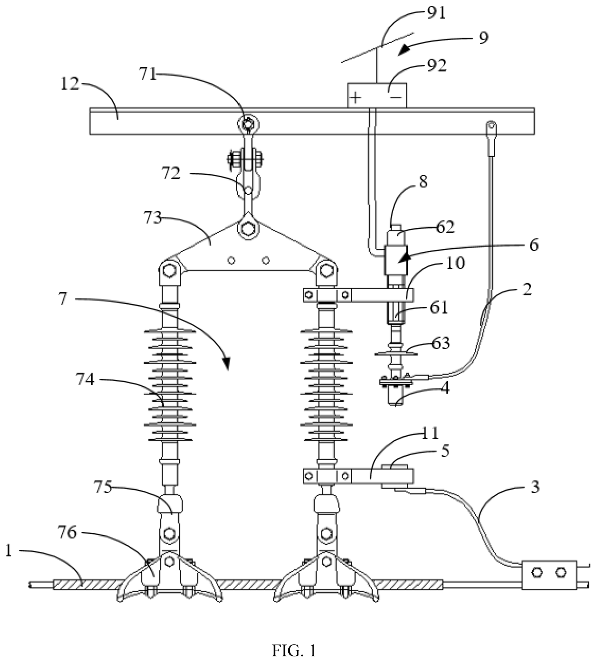

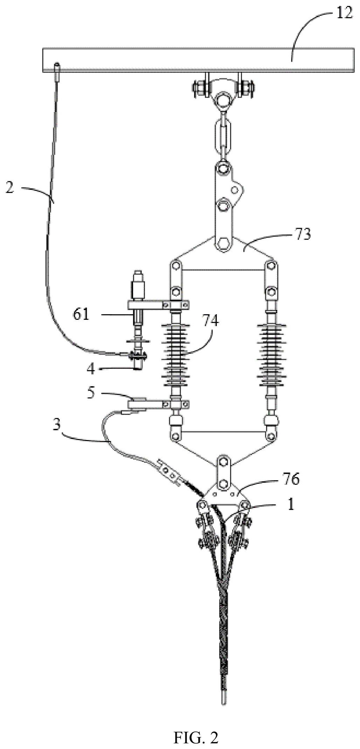

In order to solve the above problems, as shown in FIGS. 1 and 2, the hardware string for the adaptive ice-melting condition of the overhead ground wire of an embodiment of the present invention includes: a ground wire 1, a static contact 5, a moving contact 4, a hardware string 7, a moving component 6, a first grounding wire 2, and a second grounding wire 3.

Specifically, the hardware string 7 is adapted to be connected to a transmission tower 12, and the moving component 6 includes a moving mechanism 61 and a control mainboard 62. The moving mechanism 61 is arranged on the hardware string 7, and the moving contact 4 is arranged on the moving mechanism 61. Exemplarily, the control mainboard 62 can be arranged on a fixed end of the moving mechanism 61, the moving contact 4 can be arranged on a free end of the moving mechanism 61, and the fixed end of the moving mechanism 61 is installed on the hardware string 7. At this point, one end of the first grounding wire 2 is connected to the moving contact 4, and the other end of the first grounding wire 2 is adapted to be connected to the transmission tower 12. The first grounding wire 2 has a certain length to meet the movement requirement of the moving contact 4.

In addition, the static contact 5 is arranged on the hardware string 7, one end of the second grounding wire 3 is connected to the static contact 5, and the other end of the second grounding wire 3 is adapt to be connected to the ground wire 1, and the ground wire 1 is arranged on the hardware string 7. The control mainboard 62 is configured to control the moving mechanism 61 to move according to environmental information, and the moving contact 4 is connected or separated from the static contact 5 under driving of the moving mechanism 61.

As shown in FIGS. 1 and 2, it also includes an environmental information collection module 8, and the environmental information collection module is electrically connected to the control mainboard 62. The environmental information collection module 8 includes at least one of a temperature sensor and a humidity sensor. Exemplarily, the environmental information collection module 8 includes the temperature sensor and the humidity sensor, and the temperature sensor and the humidity sensor are installed on the control mainboard 62 and electrically connected to the control mainboard 62.

In a practical application, the control mainboard 62 comprehensively determines whether the current environment where the ground wire 1 is located is non-icing, icing or impending icing according to the temperature information detected by the temperature sensor and the humidity information detected by the humidity sensor, and then controls the moving mechanism 61 to perform a corresponding action.

It should be noted that, when the control mainboard 62 determines that the environment where the ground wire 1 is located is non-icing according to current environmental information, the control mainboard 62 controls the moving mechanism 61 to move, and the moving contact 4 comes into contact with the static contact 5 under the driving of the moving mechanism 61. At this point, the first grounding wire 2, the second grounding wire 3, and the ground wire 1 are in a conductive state. When the control mainboard 62 determines that the environment where the ground wire 1 is located is icing or impending icing according to the current environmental information, the control mainboard 62 controls the moving mechanism 61 to move, the moving contact 4 separates from the static contact 5 under the driving of the moving mechanism 61. At this time, the first grounding wire 2 and the second grounding wire 3 are in a disconnected state, so that the direct current ice-melting job can be performed on the ground wire 1. That is to say, the moving contact 4 can move flexibly under the drive of the moving mechanism 61. When there is no icing, the moving contact 4 comes into contact with the static contact 5, thus grounding is achieved. When there is icing or impending icing, the moving contact 4 separates from the static contact 5, thereby insulation is achieved, and the use requirements of lightning protection grounding and ice-melting insulation are considered. In addition, the switch automatically opens after icing without the need for manual tower climbing, reducing the time to disconnect the grounding knife switch when line icing, and achieving faster the ice-melting of the ground wire 1.

In some embodiments, in a case where an ambient temperature is -10~0 °C and an ambient humidity is greater than or equal to 80%, the control mainboard 62 controls the moving mechanism 61 to move to separate the moving contact 4 from the static contact 5.

In a practical application, when the temperature collected by the temperature sensor is -10~0 °C and the humidity collected by the humidity sensor is ≥ 80%, the control mainboard 62 determines the current environmental information as an icing or impending ice-melting state, and controls the moving mechanism 61 to contract to separate the moving contact 4 from the static contact 5, and the ground wire 1 is in an insulated state; thus, a direct current can be applied to the ground wire 1 to realize the ice-melting of the ground wire 1.

When the temperature collected by the temperature sensor is higher than 5 °C or lower than -15 °C, and the humidity collected by the humidity sensor is ≤ 60%, the moving mechanism 61 is controlled to extend, the moving contact 4 and the static contact 5 are closed, and the grounding of the ground wire 1 is achieved.

In some embodiments, as shown in FIGS. 1 and 2, the hardware string 7 includes a wire clamp 76, a double yoke plate 73, a hang some hardware 71, a U-shaped hanging ring 72, and a first insulator 74; an upper end of the hang some hardware 71 is adapted to be connected to the transmission tower 12, and a lower end of the hang some hardware 71 is connected to the double yoke plate 73 through the U-shaped hanging ring 72; two lower ends of the double yoke plate 73 are respectively connected to a string of the first insulators 74, and bottom ends of the two strings of the first insulators 74 are connected to the wire clamp 76. In addition, the two strings of the first insulators 74 are symmetrically distributed.

The moving mechanism 61 is arranged on one end of the first insulator 74 near the double yoke plate 73 through a first mounting base 10, the static contact 5 is arranged on one end of the first insulator 74 near the wire clamp 76 through a second mounting base 11, and the ground wire 1 is arranged on the wire clamp 76.

It should be noted that the first mounting base 10 includes a first mounting plate and a second mounting plate, where both the first mounting plate and the second mounting plate include an arc-shaped mounting portion and a connecting portion connected to the arc-shaped mounting portion; the two arc-shaped mounting portions are clamped on the outer circumference of the first insulator 74, and the fixed end of the moving mechanism 61 is mounted on the connecting portion. In this way, the installation of the moving mechanism 61 and the first insulator 74 can be achieved. The structure of the second mounting base 11 is similar to that of the first mounting base 10, and will not be repeated here.

It should be pointed out that the first mounting base 10 and the second mounting base 11 are installed on the same string of first insulators 74, that is to say, the first mounting base 10 and the second mounting base 11 are arranged in sequence along a length direction of the first insulator 74, and the first mounting base 10 and the second mounting base 11 are arranged relative to each other, so as to ensure the alignment of the moving contact 4 and the static contact 5.

In some embodiments, the first insulator 74 is a composite insulator with an insulation gap.

It should be noted that in order to ensure the lightning protection effect of the ground wire 1, the first insulator 74 is a composite insulator with an insulation gap. When ice on the ground wire 1 melts, and the designed and stipulated ice-melting current of the ground wire 1 passes through of the ground wire 1, the first insulator 74 will not be broken down, which ensures the effective insulation of the ground wire 1; when the ground wire 1 is struck by lightning, the presence of the insulation gap can ensure that the lightning current flows smoothly into the ground through the gap, without affecting the lightning protection effect of the ground wire 1.

In some embodiments, the wire clamp 76 includes a suspension wire clamp or a tension wire clamp.

Specifically, as shown in FIG. 1, the clamp 76 is the suspension wire clamp, and there are two suspension wire clamps. One suspension wire clamp is connected to one string of the first insulators 74 through a socket clevis 75, and the other suspension wire clamp is connected to another string of the first insulators 74 through another socket clevis 75. Thus, the ground wire 1 is simultaneously connected to two suspension wire clamps.

As shown in FIG. 2, the wire clamp 76 is the tension wire clamp. At this time, another double yoke plate 73 is connected to the two strings of the first insulators 74 through two socket clevises 75, and the tension wire clamp is connected to the double yoke plate 73. In this way, the ground wire 1 is connected to the tension wire clamp.

In some embodiments, the moving mechanism 61 is a linear moving part. Exemplarily, the moving mechanism 61 can be an electric push rod, an air cylinder, a hydraulic rod, etc.

In some embodiments, as shown in FIGS. 1 and 2, the moving component 6 further includes a second insulator 63, and the moving contact 4 is connected to the moving mechanism 61 through the second insulator 63.

It should be noted that the function of the second insulator 63 is to prevent the induced electricity of the ground wire 1 from affecting the electric push rod and the control mainboard 62.

In some embodiments, a human-computer interaction module is also included, where the human-computer interaction module is adapted to be arranged under the transmission tower 12, the human-computer interaction module is electrically connected to the control mainboard 62, and the human-computer interaction module is configured to receive an instruction and display information input by a user.

Where the human-computer interaction module receives the instruction input by the user through an input device such as a touch screen, a button, a keyboard, etc. The user can input a control parameter, select an operation mode, or perform a specific function. For example, the extension or shortening of the electric push rod is controlled. The human-computer interaction module is equipped with a display screen for the real-time display of a device status, an operation prompt, an error information, and other information. The display screen can display various forms of information such as text, graphics, animations, etc., improving the readability and intuitiveness of information. For example, the display screen can display temperature information, humidity information, etc.

In addition, the human-computer interaction module is electrically connected to the control mainboard 62 through a cable, a bus, and other connection methods. The control mainboard 62 is responsible for processing instructions and data transmitted by the human-computer interaction module, and controlling the operation of the device.

In a practical application, the arrangement of the human-computer interaction module below the transmission tower 12 not only improves the interactivity and user-friendliness of the device, but also provides strong support for remote monitoring and intelligent control of the device. That is to say, it is possible to manually close or open the switch.

In some embodiments, as shown in FIGS. 1 and 2, a power supply component 9 is further included, where the power supply component 9 includes a photovoltaic panel 91 and a storage battery 92, the photovoltaic panel 91 is adapted to be arranged on the transmission tower 12, the photovoltaic panel 91 is electrically connected to the storage battery 92, and at least one of the moving mechanism 61 and the control mainboard 62 is electrically connected to the storage battery 92.

It should be noted that the photovoltaic panel 91 converts sunlight into electrical energy through the photoelectric effect. The photovoltaic panel 91 is electrically connected to the storage battery 92 through a wire or a cable, and the generated electrical energy is stored in the storage battery 92. The storage battery 92 is used to store the electrical energy generated by the photovoltaic panel 91 and provide power to components such as the moving mechanism 61 and the control mainboard 62 when needed.

Exemplarily, the storage battery 92 can provide power to the control mainboard 62, the electric push rod, the temperature sensor, the humidity sensor, etc.

In some embodiments, in a case where the moving contact 4 and the static contact 5 are separated, a maximum straight-line distance between the moving contact 4 and the static contact 5 is 240-260 mm. For example, the maximum straight-line distance is 240 mm, 250 mm, and 260 mm.

It should be noted that the linear distance between the moving contact 4 and the static contact 5 can reach 250 mm after the moving contact 4 contracts. While ensuring the ice-melting function, it also has the function of preventing overvoltage such as short circuit of the line.

As can be seen from the above, the insulation and grounding status of the hardware string for the adaptive ice-melting condition of the overhead ground wire in the embodiments of the present invention can be automatically or manually adjusted according to different needs. Before the tower climbing operation, the hardware string for the adaptive ice-melting condition of the overhead ground wire is adjusted to the grounding state, so as to avoid the threat of the induced voltage on the ground wire 1 to the operator. In a state where the ice-melting is not prepared, the hardware string for the adaptive ice-melting condition of the overhead ground wire is adjusted to the grounding state, and the ground wire 1 has a good lightning protection and grounding function. In an ice-melting state, the hardware string for the adaptive ice-melting condition of the overhead ground wire is adjusted to the insulation state; at this time, direct current can be applied to the ground wire 1 to achieve the ice-melting of the ground wire 1.

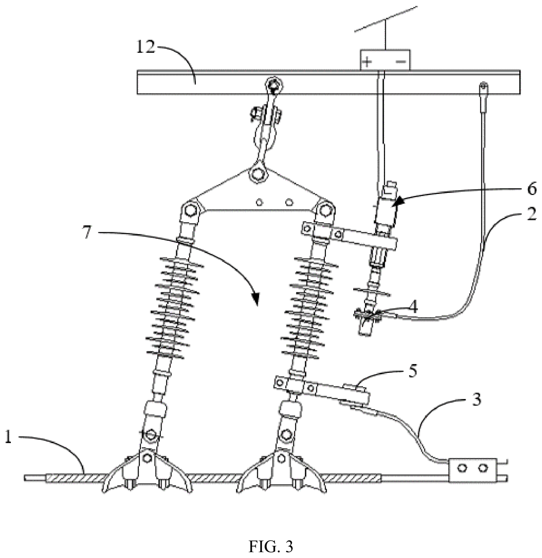

It should be noted that, as shown in FIG. 1, the hardware string 7 will not affect the opening and closing of the moving contact 4 and the static contact 5 under a static condition. As shown in FIG. 3, the hardware string 7 will not affect the opening and closing of the moving contact 4 and the static contact 5 under a swinging condition.

Finally, it should be noted that the above embodiments are only used to illustrate the technical solutions of the present invention, not to limit them; although the present invention has been described in detail with reference to the foregoing embodiments, a person with ordinary skill in the art should understand that he may still modify the technical solutions recited in the foregoing embodiments or equivalently replace some of the technical features therein; and these modifications or replacements do not take the essence of the corresponding technical solutions out of the spirit and scope of the technical solutions of the embodiments of the present invention.

## Claims

1. A hardware string for an adaptive ice-melting condition of an overhead ground wire, comprising: a ground wire (1), a static contact (5), a moving contact (4), a hardware string (7), a moving component (6), a first grounding wire (2), a second grounding wire (3), and an environmental information collection module (8);
the hardware string (7) is adapted to be connected to a transmission tower (12); the moving component (6) comprises a moving mechanism (61) and a control mainboard (62), the moving mechanism (61) is arranged on the hardware string (7), and the moving contact (4) is arranged on the moving mechanism (61); one end of the first grounding wire (2) is connected to the moving contact (4), and the other end of the first grounding wire (2) is adapted to be connected to the transmission tower (12); the static contact (5) is arranged on the hardware string (7), one end of the second grounding wire (3) is connected to the static contact (5), and the other end of the second grounding wire (3) is adapted to be connected to the ground wire (1); the ground wire (1) is arranged on the hardware string (7); wherein the environmental information collection module (8) is electrically connected to the control mainboard (62), and the environmental information collection module (8) comprises at least one of a temperature sensor and a humidity sensor; the control mainboard (62) is configured to control the moving mechanism (61) to move according to environmental information determined by the environmental information collection module (8), and the moving contact (4) is connected or separated from the static contact (5) under driving of the moving mechanism (61).

2. The hardware string for the adaptive ice-melting condition of the overhead ground wire according to claim 1, wherein in a case where an ambient temperature is -10~0 °C and an ambient humidity is greater than or equal to 80%, the control mainboard (62) controls the moving mechanism (61) to move to separate the moving contact (4) from the static contact (5).

3. The hardware string for the adaptive ice-melting condition of the overhead ground wire according to claim 1, wherein in a case where an ambient temperature is higher than 5 °C or lower than -15 °C, and an ambient humidity is ≤ 60%, the control mainboard (62) controls the moving mechanism (61) to move to connect the moving contact (4) with the static contact (5).

4. The hardware string for the adaptive ice-melting condition of the overhead ground wire according to any one of claims 1 to 3, wherein the hardware string (7) comprises a wire clamp (76), a double yoke plate (73), a hang some hardware (71), a U-shaped hanging ring (72), and a first insulator (74); an upper end of the hang some hardware (71) is adapted to be connected to the transmission tower (12), and a lower end of the hang some hardware (71) is connected to the double yoke plate (73) through the U-shaped hanging ring (72); two lower ends of the double yoke plate (73) are respectively connected to a string of the first insulators (74), and bottom ends of the two strings of the first insulators (74) are connected to the wire clamp (76);
wherein the moving mechanism (61) is arranged on one end of the first insulator (74) near the double yoke plate (73) through a first mounting base (10), the static contact (5) is arranged on one end of the first insulator (74) near the wire clamp (76) through a second mounting base (11), and the ground wire (1) is arranged on the wire clamp (76).

5. The hardware string for the adaptive ice-melting condition of the overhead ground wire according to claim 4, wherein the first insulator (74) is a composite insulator with an insulation gap; and/or,
the two strings of the first insulators (74) are symmetrically distributed.

6. The hardware string for the adaptive ice-melting condition of the overhead ground wire according to claim 4, wherein the wire clamp (76) comprises a suspension wire clamp (76) or a tension wire clamp (76).

7. The hardware string for the adaptive ice-melting condition of the overhead ground wire according to any one of claims 1 to 3, wherein the moving mechanism (61) is a linear moving part; and/or,
the moving component (6) further comprises a second insulator (63), and the moving contact (4) is connected to the moving mechanism (61) through the second insulator (63).

8. The hardware string for the adaptive ice-melting condition of the overhead ground wire according to any one of claims 1 to 3, further comprising: a human-computer interaction module, wherein the human-computer interaction module is adapted to be arranged under the transmission tower (12), the human-computer interaction module is electrically connected to the control mainboard (62), and the human-computer interaction module is configured to receive an instruction and display information input by a user.

9. The hardware string for the adaptive ice-melting condition of the overhead ground wire according to any one of claims 1 to 3, further comprising a power supply component (9), wherein the power supply component (9) comprises a photovoltaic panel (91) and a storage battery (92), the photovoltaic panel (91) is adapted to be arranged on the transmission tower (12), the photovoltaic panel (91) is electrically connected to the storage battery (92), and at least one of the moving mechanism (61) and the control mainboard (62) is electrically connected to the storage battery (92).

10. The hardware string for the adaptive ice-melting condition of the overhead ground wire according to any one of claims 1 to 3, wherein in a case where the moving contact (4) and the static contact (5) are separated, a maximum straight-line distance between the moving contact (4) and the static contact (5) is 240-260 mm.
